# EUROPEAN PATENT APPLICATION

(11) **EP 4 786 091 A1**
(43) Date of publication of application: **05.08.2026**
(21) Application number: 25215517.1
(22) Date of filing: 13.11.2025
(51) Int. Cl.: B23Q 1/00, B23Q 1/52, B23Q 3/08

(54) **ROTARY TABLE DEVICE**

(30) Priority: 04.02.2025 JP 2025016650
(71) Applicant: NIKKEN KOSAKUSHO WORKS, LTD., Osaka 574-0023 (JP)
(72) Inventor: FUJIMOTO, Kazuhisa, Osaka, 574-0023 (JP); RAY, Nathan, Catcliffe (GB); ECKERSALL, Stephen, Catcliffe (GB); CORKER, Charles Millward, Catcliffe (GB)
(74) Representative: Müller Hoffmann & Partner

(57) **Abstract**

A rotary table device (1) includes: a rotary table (2) including a table surface (20) and a recess (21); a frame (4) configured to rotatably support the rotary table (2) from its back side; a clamp unit (5) fixedly disposed within the recess of the rotary table; a shaft (3) attached to the frame and configured to supply fluid to the clamp unit; a power transmission fluid passage (38) extending from the shaft through the rotary table to the inside of the clamp unit, and configured to pass fluid for clamping or unclamping the workpiece holder by a clamp mechanism; and a seal mechanism (25) configured to seal a gap between an inner wall surface of the recess of the rotary table and an outer wall surface of the clamp unit.

## Description

### BACKGROUND

The present invention relates to rotary table devices, and more particularly to a rotary table device having a table surface on one-end side in the axial direction of its rotation axis.

Conventionally, a clamping device such as that disclosed in European Unexamined Patent Application Publication No. 004385659 is known as a device for fixing a workpiece.

The clamping device of European Unexamined Patent Application Publication No. 004385659 uses a clamp bolt fixed to a jig plate for holding a workpiece. In this clamping device, a piston is vertically moved by fluid and a spring, so that lock balls are engaged with a recess formed in the clamp bolt. By drawing the clamp bolt in through this engagement, the jig plate holding the workpiece is fixed.

### SUMMARY

A clamping device such as that disclosed in European Unexamined Patent Application Publication No. 004385659 is fixed on the flat table surface of a rotary table device, and a jig plate for holding a workpiece is held on the clamping device. As a result, the height of the workpiece from the table surface becomes large, which narrows the region for machining the workpiece. This makes it difficult to perform machining when the workpiece is large or when a small machine having a small Z-axis stroke for cutting is used for machining. Furthermore, such an increase in the height of the workpiece from the table surface results in a reduction in the mounting rigidity of the workpiece.

The present invention has been made to solve the above problems, and its object is to provide a rotary table device that enables both a reduction in the height of the workpiece from the table surface and an improvement in the mounting rigidity of the workpiece.

In order to achieve the above object, a rotary table device according to one aspect of the present invention includes: a rotary table including a table surface provided on one-end side in an axial direction of a rotation axis, and a recess recessed from the table surface toward the other end side in the axial direction; a frame configured to rotatably support the rotary table from the back side of the rotary table; a workpiece holder configured to hold a workpiece; a clamp unit fixedly disposed within the recess of the rotary table, and including a clamp mechanism configured to clamp the workpiece holder by fluid pressure; a shaft attached to the frame and configured to supply fluid to the clamp unit; a power transmission fluid passage extending from the shaftthrough the rotary table to the inside of the clamp unit, and configured to pass fluid that is used to clamp or unclamp the workpiece holder by the clamp mechanism; and a seal mechanism configured to seal a gap between an inner wall surface of the recess of the rotary table and an outer wall surface of the clamp unit.

Preferably, the clamp mechanism includes a receiving hole configured to receive a downward engaging portion of the workpiece holder, and a fluid-pressure gripping mechanism configured to mechanically grip, by fluid pressure, the downward engaging portion received in the receiving hole from the outer periphery of the downward engaging portion, and the rotary table device further includes a clamp-mechanism cleaning fluid passage extending from the shaft through the rotary table to the receiving hole of the clamp mechanism and configured to clean the receiving hole.

Preferably, the rotary table device further includes a table-surface cleaning fluid passage extending from the shaft through the rotary table to the table surface, and configured to supply fluid onto the table surface to clean the table surface.

Preferably, the workpiece holder includes a workpiece support portion configured to hold the workpiece, and a fluid-pressure workpiece holding mechanism configured to mechanically displace the workpiece support portion by fluid pressure, and the rotary table device further includes a workpiece-holder driving fluid passage connected to the fluid-pressure workpiece holding mechanism of the workpiece holder, extending from the shaft through the rotary table to the table surface, and configured to supply fluid that is used to drive the workpiece support portion.

Preferably, the clamp mechanism further includes a cap including an extension portion that contacts a wall surface of the receiving hole, the cap being slidable within the receiving hole and being biased toward the one-end side in the axial direction.

Preferably, the rotary table includes a plurality of the recesses, a plurality of the clamp mechanisms is provided, and the clamp mechanisms are each disposed in a corresponding one of the recesses such that, when the workpiece holder is clamped by the clamp mechanisms, a lower surface of the workpiece holder comes into abutting contact with the table surface.

### Effects of the Invention

The rotary table device of the present invention enables both a reduction in the height of the workpiece from the table surface and an improvement in the mounting rigidity of the workpiece.

### BRIEF DESCRIPTION OF THE DRAWINGS

FIG. 1 is a schematic sectional view showing the general configuration of a rotary table device according to a first embodiment of the present invention, together with a workpiece holder to which a workpiece is attached.
FIG. 2 is a sectional view of the rotary table device of FIG. 1.
FIG. 3 is a sectional view showing the workpiece, the workpiece holder, and a clamp unit.
FIGS. 4(A) to 4(E) are partial sectional views illustrating the clamping operation of the clamp unit.
FIG. 5 is a sectional view of a rotary table device according to a second embodiment of the present invention.
FIG. 6 is a sectional view of a rotary table device according to a third embodiment of the present invention.
FIG. 7 is a sectional view of a rotary table device according to a fourth embodiment of the present invention.
FIGS. 8(A) to 8(C) are sectional views illustrating the operation of the workpiece holder in holding the workpiece.
FIG. 9 is a plan view of a rotary table device according to a fifth embodiment of the present invention.

### DETAILED DESCRIPTION

Embodiments of the present invention will now be described in detail with reference to the drawings. The same or corresponding portions are denoted by the same reference signs throughout the drawings, and description thereof will not be repeated.

### First Embodiment

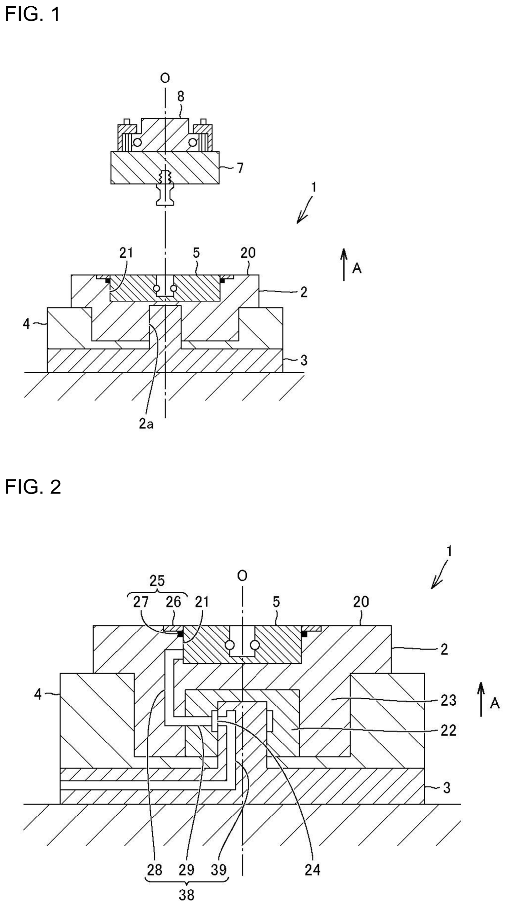

FIG. 1 is a schematic sectional view showing the general configuration of a rotary table device according to an embodiment of the present invention, together with a workpiece holder to which a workpiece is attached. An overview of a rotary table device 1 will be described with reference to FIG. 1. In FIG. 1, the direction indicated by arrow A is referred to as the one-end side in the axial direction of the rotation axis O or the upper side (or upward), and the opposite direction to the direction indicated by arrow A is referred to as the other-end side in the axial direction or the lower side (or downward).

As shown in FIG. 1, the rotary table device 1 includes a rotary table 2, a frame 4 that rotatably supports the rotary table 2 from its back side (lower side), and a shaft 3 attached to the frame 4. The rotary table 2, the shaft 3, and the frame 4 are the main elements of the rotary table device 1 and are formed of, for example, a rigid material.

The rotary table 2 has a through hole 2a extending along the rotation axis O, and the shaft 3 passes through the through hole 2a. The rotary table 2 has a table surface 20 provided on the one-end side in the axial direction of the rotation axis O (upper side), and a recess 21 recessed toward the other-end side in the axial direction (downward) from the table surface 20. A clamp unit 5 is fixedly disposed within the recess 21. A workpiece holder 7 to which a workpiece 8 is attached is detachably secured to the rotary table 2 via the clamp unit 5. FIG. 1 shows the workpiece holder 7 before being clamped by the clamp unit 5.

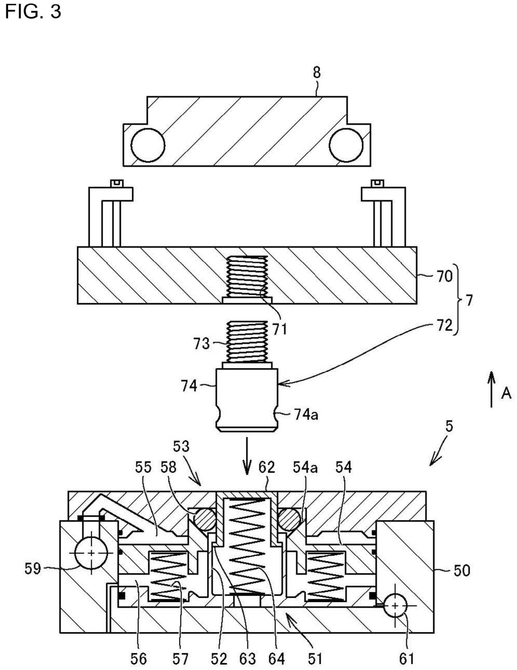

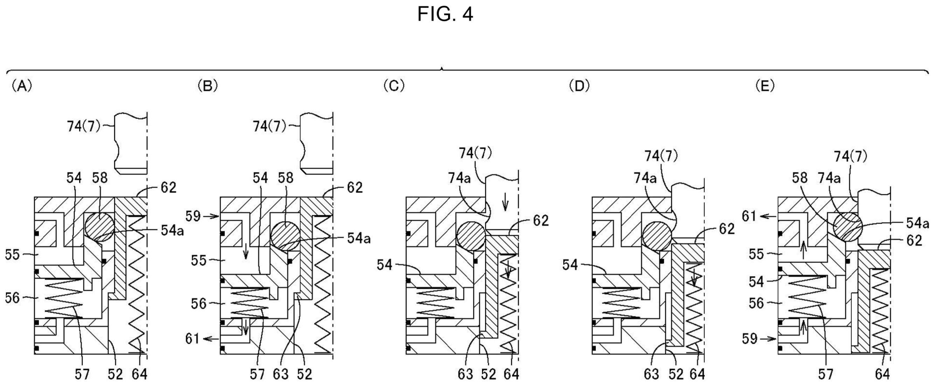

FIG. 2 is a sectional view of the rotary table device of FIG. 1; FIG. 3 is a sectional view showing the workpiece, the workpiece holder, and the clamp unit; and FIG. 4 show partial sectional views illustrating the clamping operation of the clamp mechanismofthe clamp unit. The specific configuration of the rotary table device will be described in detail with reference to FIGS. 2 to 4. As in FIG. 1, in FIGS. 2 and 3, the direction indicated by arrow A is referred to as the one-end side in the axial direction of the rotation axis O or the upper side (orupward), and the opposite direction to the direction indicated by arrow A is referred to as the other-end side in the axial direction or the lower side (or downward). First, the rotary table 2, the shaft 3, and the frame 4 will be described in detail with reference to FIG. 2.

As described above, the clamp unit 5 for clamping the workpiece holder 7 is disposed in the recess 21 formed in the table surface 20 of the rotary table 2. The rotary table 2 is rotationally driven about the rotation axis O by a drive device (not shown) provided on the frame 4. The rotational position of the rotary table 2 is detected by a control unit (not shown), and the drive device is controlled so that the rotary table 2 can be indexed to a desired angle. That is, the rotary table 2 is a rotating member.

As noted above, the table surface 20 is a flat upper surface of the rotary table 2, and the recess 21 that is recessed downward is provided at approximately the center of the table surface 20. The recess 21 is typically substantially cylindrical, and preferably, the bottom surface of the recess 21 is also flat. In the present embodiment, a single recess 21 is provided substantially at the center of the table surface 20. In the present embodiment, in the state in which the clamp unit 5 is disposed and fixed within the recess 21, the upper end face of the clamp unit 5 is substantially flush with the table surface 20. However, the upper end face of the clamp unit 5 need not necessarily be flush with the table surface 20. The upper end face of the clamp unit 5 may be higher than the table surface 20, or may be lower than the table surface 20 such that the clamp unit 5 is recessed within the recess 21.

As shown in FIG. 2, the rotary table 2 includes a joint sleeve 22 and a circular table body 23 that surrounds the outer periphery of the joint sleeve 22. The joint sleeve 22 and the circular table body 23 are connected together by, for example, bolts (not shown).

As shown in FIG. 2, the rotary table device 1 is provided with a seal mechanism 25 that seals a gap between the inner wall surface of the recess 21 of the rotary table 2 and the outer wall surface of the clamp unit 5. This gap is a groove provided at the upper edge of the peripheral wall of the recess 21 of the rotary table 2, and the seal mechanism 25 is disposed within this groove.

The seal mechanism 25 includes a seal 26 located at the table surface 20 and an O-ring 27 located under the seal 26. Both the seal 26 and the O-ring 27 are elastic members made of, for example, synthetic resin. The O-ring 27 is an annular member having an inner diameter smaller than the outer diameter of the outer wall surface of the clamp unit 5. This allows the O-ring 27 to be held in close contact with, and fixed to, the outer wall surface of the clamp unit 5 by its own elastic force.

The seal mechanism 25 may be any mechanism as long as it seals the gap between the inner wall surface of the recess 21 of the rotary table 2 and the outer wall surface of the clamp unit 5, and may be composed of either the seal 26 or the O-ring 27. Although the gap has been described as a groove provided in the rotary table 2, it may instead be provided in the clamp unit 5, and need not necessarily be intentionally provided specifically for accommodating the seal mechanism 25.

The shaft 3 is a non-rotating member and is supported by a rolling bearing (not shown) provided in the joint sleeve 22. The outer peripheral surface of the shaft 3 faces the inner peripheral surface of the joint sleeve 22. The shaft 3 is attached to the frame 4 and supplies fluid to the clamp unit 5. Like the shaft 3, the frame 4 is a non-rotating member. The frame 4 forms the frame structure of the rotary table device 1.

As shown in FIG. 2, the rotary table device 1 includes a power transmission fluid passage 38. The power transmission fluid passage 38 extends from the shaft 3 through the rotary table 2 to the inside of the clamp unit 5, and passes fluid for clamping orunclamping the workpiece holder 7 (FIG. 1). Specifically, the power transmission fluid passage 38 is formed by a shaft-side fluid passage 39, a joint-sleeve-side fluid passage 29, and a table-side fluid passage 28. The fluid passing through the power transmission fluid passage 38 may be, for example, air or a liquid such as hydraulic oil.

The shaft-side fluid passage 39 is provided inside the shaft 3, and its fluid inlet (power input port) is formed in the outer peripheral surface of the shaft 3. Specifically, the shaft-side fluid passage 39 includes: a lower lateral shaft-side passage extending laterally from the power input port in the outer peripheral surface of the shaft 3; a vertical shaft-side passage connected to the end of the lower lateral shaft-side passage and extending along the rotation axis O of the shaft 3; and an upper lateral shaft-side passage connected to the upper portion of the vertical shaft-side passage and extending laterally.

The joint-sleeve-side fluid passage 29 is connected to the upper lateral shaft-side passage of the shaft-side fluid passage 39. At the portion where the joint-sleeve-side fluid passage 29 is connected to the shaft 3, an annular groove 24 is formed along the inner periphery of the joint sleeve 22. The joint-sleeve-side fluid passage 29 is connected to the annular groove 24 and extends laterally.

The table-side fluid passage 28 includes: a lower lateral table-side passage connected to the joint-sleeve-side fluid passage 29 and extending laterally; a vertical table-side passage connected to the end of the lower lateral table-side passage and extending vertically; and an upper lateral table-side passage connected to the upper end of the vertical table-side passage, extending laterally, and connected to the clamp unit 5. The power transmission fluid passage 38 is thus formed by the shaft-side fluid passage 39, the joint-sleeve-side fluid passage 29, and the table-side fluid passage 28, and serves as a passage for passing the fluid introduced from the power input port to the clamp unit 5.

Next, the clamp unit 5 will be described with reference to FIG. 3. As described above, the clamp unit 5 is fixedly disposed within the recess 21 of the rotary table 2. The clamp unit 5 is a device that clamps, by fluid pressure, the workpiece holder 7 holding the workpiece 8. The workpiece holder 7 includes a holder body 70 that holds the workpiece 8, and a mounting portion 72 that is detachably attached to the holder body 70. A threaded hole 71 having threads formed therein for securing the mounting portion 72 is provided on the underside of the holder body 70.

The mounting portion 72 typically has threads formed on its upper portion 73, and a groove 74a extending in the circumferential direction on its lower portion 74. The lower portion 74 is a downward engaging portion that is received (drawn) into a receiving hole 52 of the clamp unit 5, described later, and clamped. The mounting portion 72 may be fixed to the holder body 70.

The outer shape of the clamp unit 5 is typically a flattened, substantially cylindrical shape. The clamp unit 5 includes a clamp body 50, and a clamp mechanism 51 that is provided inside the clamp body 50 and that clamps, by fluid pressure, the workpiece holder 7 holding the workpiece 8. The clamp body 50 is a frame that holds the clamp mechanism 51 from the outside.

The clamp mechanism 51 includes: a receiving hole 52 that receives the downward engaging portion 74 of the workpiece holder 7; a fluid-pressure gripping mechanism 53 that grips the downward engaging portion 74 received in the receiving hole 52 from its outer periphery by fluid pressure; and a cap 62 that is vertically slidable within the receiving hole 52. The receiving hole 52 is located substantially at the center of the clamp unit 5 and extends vertically along the rotation axis O.

The fluid-pressure gripping mechanism 53 generally includes a piston 54 capable of moving vertically, an upper chamber 55 located above the piston 54, a lower chamber 56 located below the piston 54, a first spring 57 that biases the piston 54 toward an upper position, and lock balls 58 that move with the piston 54.

A portion of the piston 54 that contacts the lock balls 58 is formed as an inclined portion 54a that slopes downward toward the inner periphery of the piston 54. Although fluid is supplied to the upper chamber 55 and the lower chamber 56 from a fluid supply port 59 and discharged from a fluid discharge port 61, separate supply and discharge passages may be provided for each of the upper and lower chambers 55, 56. The power transmission fluid passage 38 is connected to the fluid supply port 59, so that fluid pressure for the fluid-pressure gripping mechanism 53 is introduced through the power transmission fluid passage 38.

The cap 62 serves to, for example, reduce or prevent entry of chips etc. into the receiving hole 52. The cap 62 is a bottomed tubular member that opens downward, and has an extension portion 63 that extends radially outward from the lower end of the bottomed tubular portion. The extension portion 63 contacts the wall surface of the receiving hole 52, and serves to retain the cap 62 within the receiving hole 52. The cap 62 is biased toward the one-end side in the axial direction (upward) by a second spring 64.

The operation of the clamp mechanism will now be described with reference to FIG. 4. First, as shown in FIG. 4(A), when the workpiece holder 7 is not received in the receiving hole 52, the lock balls 58 contact the inclined portion 54a of the piston 54 and are supported upward. The cap 62 is biased toward an upper position by the second spring 64.

As shown in FIG. 4(B), fluid is supplied from the fluid supply port 59 into the upper chamber 55, and discharged from the lower chamber 56 through the fluid discharge port 61. The first spring 57 is thus compressed to move the piston 54 downward. As a result, the lock balls 58 that are in contact with the inclined portion 54a of the piston 54 are moved downward.

As shown in FIGS. 4(C) and 4(D), the downward engaging portion 74 of the workpiece holder 7 is inserted into the receiving hole 52, thereby compressing the second spring 64 and pushing the cap 62 downward. The extension portion 63 of the cap 62 thus slides downward while remaining in contact with the wall surface of the receiving hole 52.

As shown in FIG. 4(E), after the downward engaging portion 74 is inserted to a predetermined position, fluid is supplied from the fluid supply port 59 into the lower chamber 56, and fluid is discharged from the upper chamber 55 through the fluid discharge port 61. The piston 54 is moved upward by the upward biasing force of the first spring 57, thereby engaging the lock balls 58 with the groove 74a of the downward engaging portion 74.

As described above, by following the procedure shown in FIGS. 4(A) to 4(E), the workpiece holder 7 can be held by the rotary table device 1 via the clamp mechanism 51. The holding of the workpiece holder 7 can thus be performed mechanically.

In the rotary table device 1 of the present embodiment, the clamp unit 5 is disposed within the recess 21 of the rotary table 2. This configuration can reduce the height of the workpiece from the mounting surface and improve the mounting rigidity of workpiece. Furthermore, since the power transmission fluid passage 38 can be built into the rotary table device 1 and is not exposed to the outside, the rotary table device 1 can have a compact shape. In addition, since the seal mechanism 25 is provided in the gap between the recess 21 of the rotary table 2 and the clamp unit 5, it is possible to reduce or prevent entry of chips of the workpiece 8 etc. into the gap.

### Second Embodiment

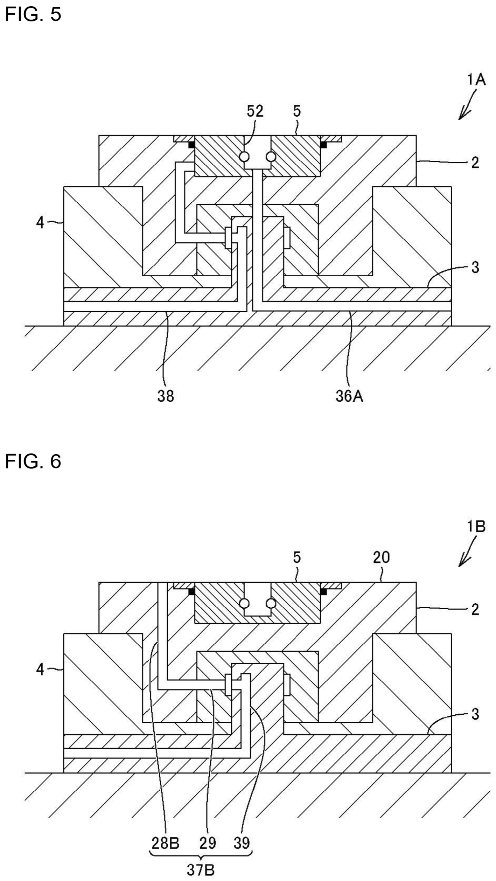

FIG. 5 is a sectional view of a rotary table device according to a second embodiment of the present invention. A rotary table device 1A according to the second embodiment will be described with reference to FIG. 5. The rotary table device 1A of the second embodiment differs from the first embodiment in that it further includes a clamp-mechanism cleaning fluid passage 36A in addition to the components of the first embodiment. Only the differences from the structure illustrated in the first embodiment will be described in detail below.

The clamp-mechanism cleaning fluid passage 36A is a passage for cleaning the receiving hole 52 of the clamp unit 5. Fluid that passes through the clamp-mechanism cleaning fluid passage 36A is typically air, but may alternatively be a liquid such as coolant.

The clamp-mechanism cleaning fluid passage 36A extends from the shaft 3 through the rotary table 2 to the receiving hole 52 of the clamp mechanism 51. The clamp-mechanism cleaning fluid passage 36A is provided inside the shaft 3, with its fluid inlet (fluid input port) provided in the outer peripheral surface of the shaft 3. Specifically, the clamp-mechanism cleaning fluid passage 36A includes a lateral passage extending laterally within the shaft 3, and a vertical passage connected to the radially inner side of the lateral passage, extending vertically, and connected to the clamp unit 5. The vertical passage extends inside the shaft 3 and the rotary table 2.

Since the clamp-mechanism cleaning fluid passage 36A is provided, chips etc. inside the receiving hole 52 of the clamp unit 5 can be efficiently removed before the downward engaging portion 74 of the workpiece holder 7 (FIG. 3) is inserted into the receiving hole 52.

### Third Embodiment

FIG. 6 is a sectional view of a rotary table device according to a third embodiment of the present invention. A rotary table device 1B according to the third embodiment will be described with reference to FIG. 6. The third embodiment differs from the first embodiment in that it further includes a table-surface cleaning fluid passage 37B in addition to the components of the first embodiment. Although the power transmission fluid passage 38 described in the first embodiment is not shown in FIG. 6, it is assumed that the power transmission fluid passage 38 is formed. Only the differences from the structure illustrated in the first embodiment will be described in detail below.

The table-surface cleaning fluid passage 37B is a passage for supplying fluid onto the table surface 20 of the rotary table 2 in order to clean the table surface 20. The fluid that passes through the table-surface cleaning fluid passage 37B is typically air, but may alternatively be a liquid such as coolant.

The table-surface cleaning fluid passage 37B differs from the power transmission fluid passage 38 in that it extends from the shaft 3 through the rotary table 2 to the table surface 20. The configuration of the table-surface cleaning fluid passage 37B is otherwise substantially the same as that of the power transmission fluid passage 38. Specifically, the table-surface cleaning fluid passage 37B is formed by the shaft-side fluid passage 39, the joint-sleeve-side fluid passage 29, and a table-side fluid passage 28B.

The table-side fluid passage 28B includes a lateral table-side passage connected to the joint-sleeve-side fluid passage 29 and extending laterally, and a vertical table-side passage connected to the radially outer end of the lateral table-side passage, extending vertically, and connected to the table surface 20. Since the table-surface cleaning fluid passage3 7B is provided, chips of the workpiece 8 etc. on the table surface 20 can be efficiently removed.

In addition to the table-surface cleaning fluid passage 37B described in the present embodiment, the clamp-mechanism cleaning fluid passage 36A described in the second embodiment may also be provided.

### Fourth Embodiment

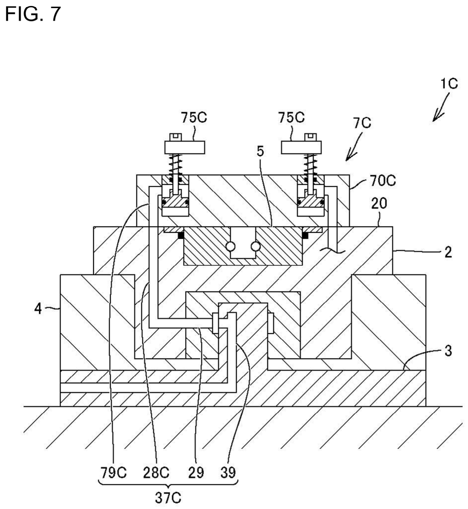

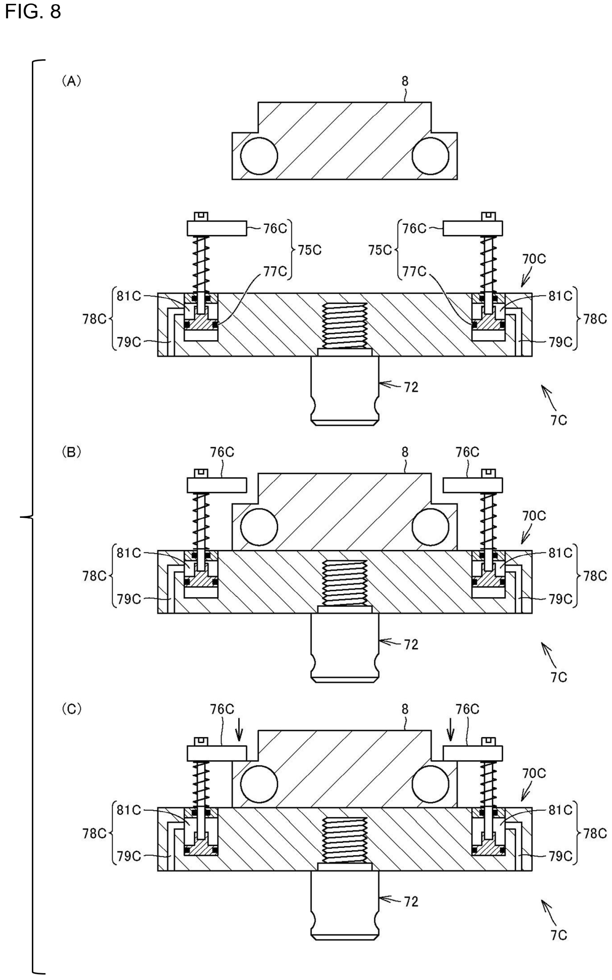

FIG. 7 is a sectional view of a rotary table device according to a fourth embodiment of the present invention, and FIGS. 8(A) to 8(C) are diagrams illustrating the operation of the workpiece holder in holding a workpiece. A rotary table device 1C according to the fourth embodiment will be described with reference to FIGS. 7 and 8(A) to 8(C). The fourth embodiment differs from the other embodiments in that it includes a workpiece-holder driving fluid passage 37C. Although the power transmission fluid passage 38 described in the first embodiment is not shown in FIG. 7, it is assumed that the power transmission fluid passage 38 is formed in the same manner as that in the first embodiment. Only the differences from the structure illustrated in the first embodiment will be described in detail below.

As shown in FIG. 7, the workpiece-holder driving fluid passage 37C is a passage for supplying fluid to a workpiece holder 7C in order to drive a workpiece support portion 75C of the workpiece holder 7C. The fluid that passes through the workpiece-holder driving fluid passage 37C is typically air, but may alternatively be a liquid such as coolant. The workpiece-holder driving fluid passage 37C is formed by the shaft-side fluid passage 39, the joint-sleeve-side fluid passage 29, a table-side fluid passage 28C, and a workpiece-holder-side fluid passage 79C.

The configuration of the workpiece holder 7C will now be described with reference to FIG. 8(A). A holder body 70C of the workpiece holder 7C includes a workpiece support portion 75C that holds the workpiece 8, and a fluid-pressure workpiece holding mechanism 78C that mechanically displaces the workpiece support portion 75C using fluid pressure. Specifically, the workpiece support portion 75C includes a workpiece clamp 76C that directly holds the workpiece 8, and a piston 77C that is connected to the workpiece clamp 76C and moves the workpiece clamp 76C. The fluid-pressure workpiece holding mechanism 78C includes a workpiece-holder-side fluid passage 79C that supplies fluid, and a piston chamber 81C in which the piston 77C is disposed and is moved by fluid supplied through the workpiece-holder-side fluid passage 79C.

Next, the operation of mechanically holding the workpiece 8 in the workpiece holder 7C will be described with reference to FIGS. 7 and 8(A) to 8(C). FIGS. 7 and 8(A) show the workpiece 8 before being fixed. First, as shown in FIG. 8(B), the workpiece 8 is placed on the upper surface of the workpiece holder 7C. Next, fluid is sequentially fed through the shaft-side fluid passage 39, the joint-sleeve-side fluid passage 29, the table-side fluid passage 28C, and the workpiece-holder-side fluid passage 79C shown in FIG. 7 in this order, thereby supplying fluid to the piston chamber 81C. As a result, as shown in FIG. 8(C), the piston 77C moves downward, causing the workpiece clamp 76C to move downward accordingly. The workpiece holder 7C thus mechanically holds the workpiece 8. Removal of the workpiece 8 is performed by discharging fluid through the workpiece-holder driving fluid passage 37C (FIG. 7). Removal of the workpiece 8 can be carried out by performing the above steps in the reverse order.

Since the workpiece-holder driving fluid passage 37C is provided in the rotary table device 1C, the operation of holding the workpiece 8 in the workpiece holder 7C can be mechanically performed.

The shaft-side fluid passage 39, the joint-sleeve-side fluid passage 29, and the table-side fluid passage 28C of the workpiece-holder driving fluid passage 37C in the present embodiment may also serve as the table-surface cleaning fluid passage 37B described in the third embodiment. The clamp-mechanism cleaning fluid passage 36A described in the second embodiment may further be provided in addition to the table-surface cleaning fluid passage 37B described above.

### Fifth Embodiment

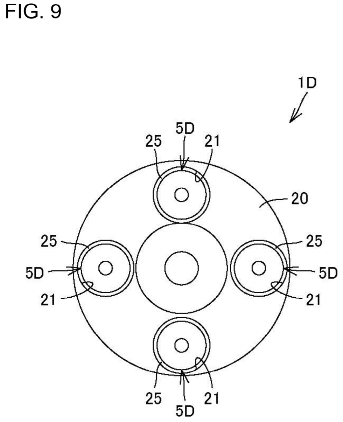

FIG. 9 is a plan view of a rotary table device according to a fifth embodiment of the present invention. A rotary table device 1D according to the fifth embodiment will be described with reference to FIG. 9. The fifth embodiment differs from the first embodiment in that a plurality of clamp units 5 is provided. Only the differences from the structure illustrated in the first embodiment will be described in detail below.

As shown in FIG. 9, in the rotary table device 1D of the present embodiment, a plurality of recesses 21 is provided in the table surface 20, and a clamp unit 5D is fixedly disposed in each of the recesses 21. Specifically, four recesses 21 are provided, and a clamp unit 5D is disposed in each of the four recesses 21. Each clamp unit 5D is provided with the seal mechanism 25 and the power transmission fluid passage 38 described above.

When the clamp units 5D are mounted in the respective recesses 21, if the upper surface of any clamp unit 5D is higher than the table surface 20, all the clamp units 5D need to have the same upper surface height. Therefore, a plurality of clamp mechanisms 51 is disposed in the respective recesses 21 such that, when the workpiece holder 7 is clamped by the clamp mechanisms 51, the lower surface of the workpiece holder 7 comes into abutting contact with the table surface 20. Specifically, the upper surface of each clamp unit 5D is made flush with, or lower than, the table surface 20 such that each clamp unit 5D is recessed relative to the table surface 20.

Since the rotary table device 1D of the present embodiment is provided with the recesses 21 and the clamp units 5D are disposed in the respective recesses 21, it is possible to machine workpieces 8 of various sizes.

Although the embodiments of the present invention have been described with reference to the drawings, the invention is not limited to the illustrated embodiments. Various modifications and alterations may be made to the illustrated embodiments without departing from the scope of the invention or the scope of equivalents.

The present invention is advantageously applicable to machine tools.

## Claims

1. A rotary table device (1) comprising:
a rotary table (2) including a table surface (20) provided on one-end side in an axial direction of a rotation axis (O), and a recess (21) recessed from the table surface (20) toward the other end side in the axial direction;
a frame (4) configured to rotatably support the rotary table (2) from a back side of the rotary table;
a workpiece holder (7) configured to hold a workpiece (8);
a clamp unit (5) fixedly disposed within the recess (21) of the rotary table (2), and including a clamp mechanism (51) configured to clamp the workpiece holder (7) by fluid pressure;
a shaft (3) attached to the frame (4) and configured to supply fluid to the clamp unit (5);
a power transmission fluid passage (38) extending from the shaft (3) through the rotary table (2) to inside of the clamp unit (5), and configured to pass fluid that is used to clamp or unclamp the workpiece holder (7) by the clamp mechanism (51); and
a seal mechanism (25) configured to seal a gap between an inner wall surface of the recess (21) of the rotary table (2) and an outer wall surface of the clamp unit (5).

2. The rotary table device (1) according to claim 1, wherein
the clamp mechanism (51) includes a receiving hole (52) configured to receive a downward engaging portion (74) of the workpiece holder (7), and a fluid-pressure gripping mechanism (53) configured to mechanically grip, by fluid pressure, the downward engaging portion (74) received in the receiving hole (52) from an outer periphery of the downward engaging portion (74), the rotary table device further comprising
a clamp-mechanism cleaning fluid passage (36A) extending from the shaft (3) through the rotary table (2) to the receiving hole (52) of the clamp mechanism (51) and configured to clean the receiving hole (52).

3. The rotary table device (1) according to claim 1 or 2, further comprising
a table-surface cleaning fluid passage (37B) extending from the shaft (3) through the rotary table (2) to the table surface (20), and configured to supply fluid onto the table surface (20) to clean the table surface.

4. The rotary table device (1) according to claim 1 or 2, wherein
the workpiece holder (7) includes a workpiece support portion (75C) configured to hold the workpiece (8), and a fluid-pressure workpiece holding mechanism (78C) configured to mechanically displace the workpiece support portion (75C) by fluid pressure, the rotary table device further comprising
a workpiece-holder driving fluid passage (37C) connected to the fluid-pressure workpiece holding mechanism (78C) of the workpiece holder (7), extending from the shaft (3) through the rotary table (2) to the table surface (20), and configured to supply fluid that is used to drive the workpiece support portion (75C).

5. The rotary table device (1) according to claim 2, wherein
the clamp mechanism (51) further includes a cap (62) including an extension portion (63) that contacts a wall surface of the receiving hole (52), the cap (62) being slidable within the receiving hole (52) and being biased toward the one-end side in the axial direction.

6. The rotary table device (1) according to claim 1 or 2, wherein
the rotary table (2) includes a plurality of the recesses (21),
a plurality of the clamp mechanisms (51) is provided, and
the clamp mechanisms (5 1) are each disposed in a corresponding one of the recesses (21) such that, when the workpiece holder (7) is clamped by the clamp mechanisms (51), a lower surface of the workpiece holder (7) comes into abutting contact with the table surface (20).
